# EUROPEAN PATENT APPLICATION

(11) **EP 1 372 319 A1**
(43) Date of publication of application: **17.12.2003**
(21) Application number: 03252168.4
(22) Date of filing: 04.04.2003
(51) Int. Cl.: H04L 29/06

(54) **Method and apparatus for facilitating the implementation of an IP link over an infiniband network**

(30) Priority: 14.05.2002 US 146103
(71) Applicant: Sun Microsystems, Inc., Santa Clara, California 95054 (US)
(72) Inventor: Hsiao-keng, Chu, Palo Alto, California 94303 (US)
(74) Representative: Davies, Simon Robert

(57) **Abstract**

One embodiment of the present invention provides a system that facilitates implementing an Internet Protocol (IP) link over an InfiniBand (IB) network. During operation, the system receives a Partition Key (P_Key) and a Queue Key (Q_Key) defined within the IB network. Next, the system associates the IP link with the combination of the P_Key and the Q_Key so that operations involving the IP link are mapped to a subset of the nodes in the IB network defined by the combination of the P_Key and the Q_Key.

## Description

### Field of the Invention

The present invention relates to computer networking, and more specifically, to a method and apparatus for facilitating the implementation of an Internet Protocol (IP) link over an InfiniBand network (Infiniband is a trademark of the Infiniband Trade Association).

### Background of the Invention

The recent explosive growth of electronic commerce has led to a proliferation of web sites on the Internet selling products as diverse as toys, books and automobiles, and providing services, such as insurance and stock trading. Millions of consumers are presently surfing through web sites in order to gather information, to make purchases, or purely for entertainment.

The increasing traffic on the Internet often places a tremendous load on the servers that host web sites. Some popular web sites receive over a million "hits" per day. In order to process this much traffic without subjecting web surfers to annoying delays in retrieving web pages, it is necessary to distribute or load balance the traffic between multiple server nodes, so that the multiple server nodes can operate in parallel to process the traffic. In addition, web applications are broken into layers with each layer existing on one or more distinct nodes. In a common *n*-tiered architecture, the application is split up into a database tier, an application or business logic tier, and a web server tier, each existing on one or more separate nodes. It is not uncommon for enterprise applications that use tiered structures and load balancing to be distributed across 50 or more nodes.

With the increasing traffic accessing these applications, and the corresponding increase in traffic between the tiers, network communications has quickly become a major bottleneck. Existing network technology has simply not progressed fast enough to handle the bandwidth from these applications. To address this issue, InfiniBand (IB) is being developed as a new interconnect technology for servers offering throughput of up to 30 gigabits per second.

While IB immediately solves the communications bottleneck between servers, it presents a new problem that does not exist within current networks. A traditional datalink within an IP network comprises a group of nodes that can communicate with one another directly at the "link" layer. Since IB itself provides full connectivity among all the nodes belonging to the same IB fabric, there is no obvious, mandatory IP link boundary, and thus no easy way to contain broadcast or multicast traffic among small groups.

Another problem with IB is that very few, if any, applications are written to utilize the IB fabric. Virtually all existing networking applications are built around IP links, and there is no current method for mapping IP links to an IB network so that multicast and broadcast traffic is contained within the small groups or subnets that the traffic is intended for.

### Summary of Invention

One embodiment of the present invention provides a system that facilitates implementing an Internet Protocol (IP) link over an InfiniBand™ (IB) network. During operation, the system receives a Partition Key (P_Key) and a Queue Key (Q_Key) defined within the IB network. Next, the system associates the IP link with the combination of the P_Key and the Q_Key so that operations involving the IP link are mapped to a subset of the nodes in the IB network defined by the combination of the P_Key and the Q_Key.

In a variation on this embodiment, the system also receives an IB multicast group ID (MGID) to facilitate multicast communications.

In a further variation on this embodiment, the system creates a multicast group record (MCGroupRecord) containing the P_Key, Q_Key, and the MGID.

In yet a further variation on this embodiment, the system stores the MCGroupRecord in a database.

In a further variation on this embodiment, the system identifies nodes in the IB network that are part of the same IP link by searching for nodes with the same P_Key, Q_Key, and MGID.

In a variation on this embodiment, the Q_Key is a well-known value to facilitate the implementation of a organization-wide IP link.

In a variation on this embodiment, the Q_Key is a private value to facilitate the creation of a departmental IP link.

Such an approach allows datalinks that comprise subgroups of the IB network to be created in order to facilitate broadcast and multicast traffic within each datalink.

### Brief Description of the Figures

Various embodiments of the invention will now be described in detail by way of example only, with reference to the following drawings:
FIG. 1 illustrates a typical network in accordance with one embodiment of the present invention.
FIG. 2 illustrates an IB network in accordance with one embodiment of the present invention.
FIG. 3 is a flowchart illustrating the process of creating an IP link within an IB network in accordance with one embodiment of the present invention.
FIG. 4 is a flowchart illustrating the process of identifying nodes in a local IP link in accordance with one embodiment of the present invention.

### Detailed Description

### Overview

To configure an Internet Protocol (IP) stack on a network node, the operating system first identifies all distinct networks attached to different IP links. One such network, InfiniBand (IB), is a fully-fledged network consisting of layer-one through layer-four of the Open System Interconnection (OSI) model. The IB link-layer subnets can be used as the foundation for IP subnetting. One problem, however, is that the IB routing standard does not exist yet. For the foreseeable future, an IB fabric will comprise only a single giant IB subnet. Aligning an IP subnet boundary with an IB subnet boundary will not be practical. It is desirable to develop other, more flexible techniques for setting up 'soft' IP links.

To this end, it is desirable for a technique that sets up an IP link to possess the following properties:
1. all the nodes belonging to the same IP link can communicate with one another at the link (below IP) layer;
2. it is possible to create multicast groups with a scope covering only the specific IP link; and
3. it is possible for nodes on the link to identify their own link-local multicast groups for the local use.

A combined Partition Key (P_Key) and Queue Key (Q_Key) can serve to delimit an IP link with the greatest flexibility. P_Keys are used to define IB partitions. The use and setup of a P_Key requires the privilege of the network administration. Therefore, it provides a 'hard' separation and protection mechanism between groups of IB nodes. Changing IB partitions requires a network administrator to reprogram P_Keys on a fabric-wide basis. Such reprogramming can consume valuable network administration time and resources, and there is likely to be some down time while reprogramming takes place. The time it takes to reprogram one department in a large organization can make this solution prohibitively expensive.

Q_Keys, on the other hand, can be assigned by the individual host. Therefore, the use of a Q_Key provides a 'soft' separation and protection mechanism. Changing the Q_Key requires only root privilege from the local host. Note that utilizing the combined P_Key and Q_Key as a link-ID in defining an IP link makes it possible to redraw IP link boundaries in an IB fabric.

To satisfy conditions 2 and 3 above, it is necessary to use the combined P_Key and Q_Key (link-ID) in creating and looking up local IB multicast groups. When a node is booting, it looks for and joins the IB multicast group with the well-known all-node multicast group ID (MGID) and matching P_Key and Q_Key. This way a unique IP link is defined by all of the nodes belonging to the special, all-node multicast group.

Condition 3 above can be met similarly. A node uses the P_Key and Q_Key from its local link-ID to look for a matching IB multicast group with a given MGID.

One example of the benefits of implementing an IP link over an IB network is in the *n*-tiered application arena. With *n*-tiered applications, large amounts of data flow between the tiers of the application. For instance, requests made to the web server typically result in requests made to the application server from the web server, which in turn typically result in requests being made to the database server from the application server. Each of these requests results in data being passed back to the requestor.

Many advances in communications and communication methods have come about as a result of these applications, the majority of which have been implemented using TCP/IP. Rather than trying to mirror these advances in an IB framework, implementing IP over IB enables applications to take full advantage of functionality that exists for IP networks while using an underlying IB framework.

Another useful application of IP over IB is with highly-available objects. Rather than spending precious time and resources rewriting and adapting highly-available objects to operate in an IB framework, implementing IP over IB allows existing applications to run without any modification.

### Typical Computer Network

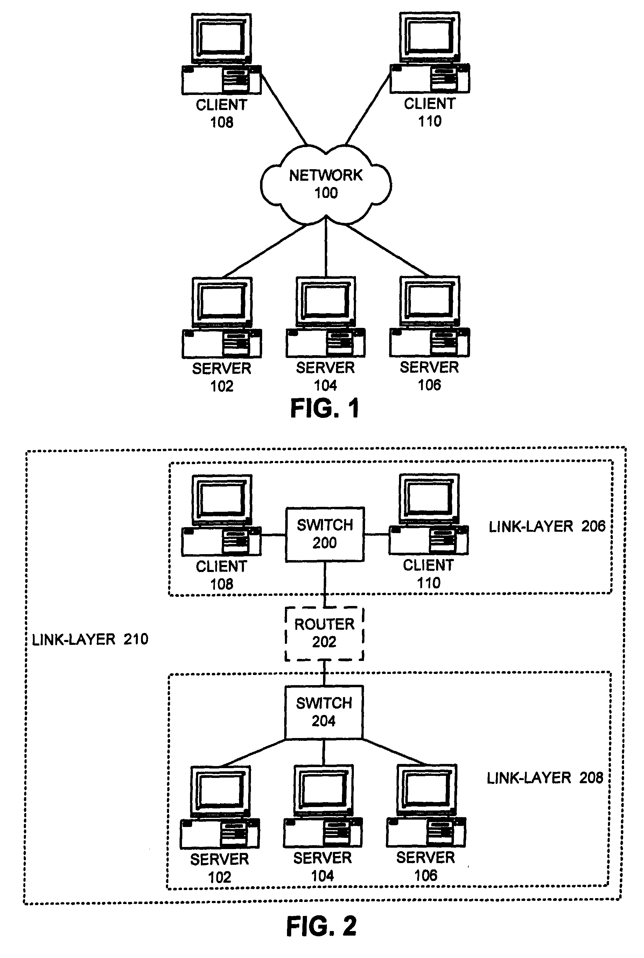

FIG. 1 illustrates a typical network in accordance with one embodiment of the present invention. Servers 102, 104, and 106 are attached to network 100. Servers 102, 104, and 106 can generally include any nodes on a computer network including a mechanism for servicing requests from a client for computational and/or data storage resources. Network 100 can generally include any type of wire or wireless communication channel capable of coupling together computing nodes. This includes, but is not limited to, a local area network, a wide area network, or a combination of networks. In one embodiment of the present invention, network 100 includes the Internet.

Clients 108 and 110 are also attached to network 100. Clients 108 and 110 can generally include any node on a network including computational capability and including a mechanism for communicating across the network.

### InfiniBand Network

FIG. 2 illustrates an IB network in accordance with one embodiment of the present invention. Switches 200 and 204, and router 202 are part of network 100. In a traditional network, clients 108 and 110 reside on a different link-layer from servers 102, 104, and 106 because they are separated by router 202. In this case, clients 108 and 110, and switch 200 are part of link-layer 206, and servers 102, 104, and 106, and switch 204 are part of link-layer 208. In an IB network, all members of the same IB fabric are members of the same link-layer, whether they are separated by router 202 or not. In the example illustrated in FIG. 2, all are members of link-layer 210.

### Process of Creating an IP Link in an IB Network

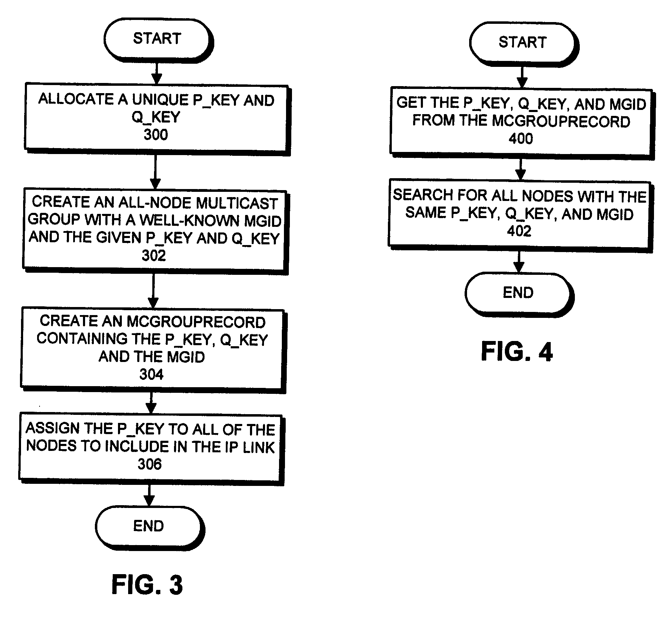

FIG. 3 is a flowchart illustrating the process of creating an IP link in an IB network in accordance with one embodiment of the present invention. The system starts by allocating a unique P_Key and Q_Key pair (step 300). Next, the system creates an all-node multicast group with a well-known MGID and the given P_Key and Q_Key (step 302). Then, the system creates the MCGroupRecord which contains the P_Key, Q_Key, and the MGID (step 304). Finally, the system assigns the P_Key to all of the nodes to include in the IP link (step 306).

### Process of Identifying Nodes in a Local IP Link

FIG. 4 is a flowchart illustrating the process of identifying nodes in a local IP link in accordance with one embodiment of the present invention. One of the properties an IP link should possess is that nodes on the link should be able to identify their own link-local multicast groups for local use. A common practice for large corporations is to break up the enterprise network into smaller subnets or local links that correspond with departments or workgroups. Applications running on these subnets typically send out multicast messages to the other nodes on the same subnet. These applications work by identifying the link-local nodes. Since all nodes within the same IB fabric are within the same link, other steps must be taken to identify the nodes that are within the same IP link. This is accomplished by getting the P_Key, Q_Key, and the MGID from the MCGroupRecord (step 400) for the local node. The system then searches for all nodes with the same P_Key, Q_Key, and MGID (step 402).

The data structures and code described herein are typically stored on a computer readable storage medium, which may be any device or medium that can store code and/or data for use by a computer system. This includes, but is not limited to, magnetic and optical storage devices such as disk drives, magnetic tape, CDs (compact discs) and DVDs (digital versatile discs or digital video discs), and computer instruction signals embodied in a transmission medium (with or without a carrier wave upon which the signals are modulated). For example, the transmission medium may include a communications network, such as the Internet.

The foregoing descriptions of embodiments of the present invention have been presented for purposes of illustration and description only, and are not intended to limit the present invention to the particular forms disclosed. Rather, many modifications and variations will be apparent to practitioners skilled in the art without departing from the scope of the present invention as defined by the appended claims.

## Claims

1. A method for implementing an Internet Protocol (IP) link over an InfiniBand (IB) network, comprising:
receiving a Partition Key (P_Key) defined within the IB network;
receiving a Queue Key (Q_Key) defined within the IB network; and
associating the IP link with the combination of the P_Key and the Q_Key,
so that operations involving the IP link are mapped to a subset of the nodes in the IB network defined by the combination of the P_Key and the Q_Key.

2. The method of claim 1, further comprising receiving an IB multicast group ID (MGID) to facilitate multicast communications.

3. The method of claim 2, further comprising creating a multicast group record (MCGroupRecord) containing the P_Key, Q_Key, and the MGID.

4. The method of claim 3, further comprising storing the MCGroupRecord in a database.

5. The method of any of claims 2 to 4, further comprising identifying nodes in the IB network that are part of the same IP link by searching for nodes with the same P_Key, Q_Key, and MGID.

6. The method of any preceding claim, wherein the Q_Key is a well-known value to facilitate the implementation of a organization-wide IP link.

7. The method of any of claims 1 to 5, wherein the Q_Key is a private value to facilitate the creation of a departmental IP link.

8. A computer-readable storage medium storing instructions that when executed by a computer cause the computer to perform a method for implementing an Internet Protocol (IP) link over an InfiniBand™ (IB) network, comprising:
receiving a Partition Key (P_Key) defined within the IB network;
receiving a Queue Key (Q_Key) defined within the IB network; and
associating the IP link with the combination of the P_Key and the Q_Key,
so that operations involving the IP link are mapped to a subset of the nodes in the IB network defined by the combination of the P_Key and the Q_Key.

9. The computer-readable storage medium of claim 8, wherein the method further comprises receiving an IB multicast group ID (MGID) to facilitate multicast communications.

10. The computer-readable storage medium of claim 9, wherein the method further comprises creating a multicast group record (MCGroupRecord) containing the P_Key, Q_Key, and the MGID.

11. The computer-readable storage medium of claim 10, wherein the method further comprises storing the MCGroupRecord in a database.

12. The computer-readable storage medium of any of claims 9 to 11, wherein the method further comprises identifying nodes in the IB network that are part of the same IP link by searching for nodes with the same P_Key, Q_Key, and MGID.

13. The computer-readable storage medium of any of claims 8 to 12, wherein the Q_Key is a well-known value to facilitate the implementation of a organization-wide IP link.

14. The computer-readable storage medium of any of claims 8 to 12, wherein the Q_Key is a private value to facilitate the creation of a departmental IP link.

15. An apparatus for implementing an Internet Protocol (IP) link over an InfiniBand (IB) network, comprising:
a receiving mechanism configured to receive a Partition Key (P_Key) defined within the IB network;
wherein the receiving mechanism is further configured to receive a Queue Key (Q_Key) defined within the IB network; and
and an association mechanism configured to associate the IP link with the combination of the P_Key and the Q_Key, so that operations involving the IP link are mapped to a subset of the nodes in the IB network defined by the combination of the P_Key and the Q_Key.

16. The apparatus of claim 15, wherein the receiving mechanism is further configured to receive an IB multicast group ID (MGID) to facilitate multicast communications.

17. The apparatus of claim 16, further comprising a creation mechanism configured to create a multicast group record (MCGroupRecord) containing the P_Key, Q_Key, and the MGID.

18. The apparatus of claim 17, further comprising a storing mechanism configured to store the MCGroupRecord in a database.

19. The apparatus of any of claims 16 to 18, further comprising an identification mechanism configured to identify nodes in the IB network that are part of the same IP link by searching for nodes with the same P_Key, Q_Key, and MGID.

20. The apparatus of any of claims 15 to 19, wherein the Q_Key is a well-known value to facilitate the implementation of a organization-wide IP link.

21. The apparatus of any of claims 15 to 19, wherein the Q_Key is a private value to facilitate the creation of a departmental IP link.

22. A computer program comprising instructions that when executed by a computer cause the computer to perform the method of any of claims 1 to 7.
